# EUROPÄISCHE PATENTANMELDUNG

(11) **EP 4 343 228 A1**
(43) Veröffentlichungstag der Anmeldung: **27.03.2024**
(21) Anmeldenummer: 23195896.8
(22) Anmeldetag: 07.09.2023
(51) Int. Cl.: F24S 25/636, H02S 20/00, F16B 2/12, F16B 5/00, F24S 25/634, F24S 25/60

(54) **BEFESTIGUNGSKLEMME**

(30) Priorität: 23.09.2022 DE 202022105355 U; 31.01.2023 DE 202023100460 U
(71) Anmelder: OBO Bettermann Hungary Kft., 2347 Bugyi (HU)
(72) Erfinder: Dobozi, Bence István, 2310 Szigetszentmiklós (HU); Lorge, Tamás, 2347 Bugyi (HU)
(74) Vertreter: Haverkamp Patentanwälte PartG mbB

(57) **Zusammenfassung**

Offenbart ist eine Befestigungsklemme 1 zum Befestigen eines Paneels, etwa eines Photovoltaik-Moduls 40, an einem Träger 42, welche Befestigungsklemme 1 ein Anschlussteil 2 mit wenigstens einem Anschlussorgan 9, 9.1, 9.2, 9.3 zum Anschließen der Befestigungsklemme 1 an einen Träger 42 zum Ausbilden eines Spannwiderlagers und mit einem Stützwiderlager, ein gegenüber dem Anschlussteil 2 einrichtbares Klemmelement 3 mit einem einen Klemmfortsatz 21 zur Anlage an einem zu befestigenden Paneel 40 aufweisenden Klemmschenkel 18 und mit einem Stützschenkel 19 zum Abstützen des Klemmelements 3 auf dem Stützwiderlager des Anschlussteils 2, wobei der Klemmfortsatz 21 dem Stützschenkel 19 gegenüberliegend angeordnet ist und eine Spanneinrichtung 4, 5 zum Spannen des Klemmelementes 3 gegenüber dem Anschlussteil 2 umfasst.

Besonderes Kennzeichen dieser Befestigungsklemme 1 ist, dass das Stützwiderlager zumindest eine Abstützfläche 13 aufweist und der Stützschenkel 19 des Klemmelementes 3 einen Stützabschnitt 27 aufweist, mit dem er auf einer Abstützfläche 13 des Stützwiderlagers, wenn in einer Spannstellung befindlich, abgestützt ist, und dass die Befestigungsklemme 1 ferner einen am Anschlussteil 2 gehaltenen Funktionskörper 31 mit zumindest einem Funktionsbereich aufweist.

## Beschreibung

Gegenstand der Erfindung ist eine Befestigungsklemme zum Befestigen eines Paneels, etwa eines Photovoltaik-Moduls an einem Träger, welche Befestigungsklemme
- ein Anschlussteil mit wenigstens einem Anschlussorgan zum Anschließen der Befestigungsklemme an den Träger zum Ausbilden eines Spannwiderlagers und Stützwiderlager,
- ein gegenüber dem Anschlussteil einrichtbares Klemmelement mit einem einen Klemmfortsatz zur Anlage an einem zu befestigenden Paneel aufweisenden Klemmschenkel und mit einem Stützschenkel zum Abstützen des Klemmelements auf dem Stützwiderlager des Anschlussteils, wobei der Klemmfortsatz dem Stützschenkel gegenüberliegend angeordnet ist und
- eine Spanneinrichtung zum Spannen des Klemmelementes gegenüber dem Anschlussteil
umfasst.

Es gibt zahlreiche Anwendungen, bei denen plattenartige Bauteile - Paneele - an einem Träger zu befestigen sind. Einer dieser Anwendungen ist die Befestigung von Photovoltaik-Modulen an einem aus mehreren Trägern bereitgestellten Tragegerüst. Befestigt werden Photovoltaik-Module an solchen Trägern mit Befestigungsklemmen. Diese werden seitlich zu dem zu befestigenden Paneel angeordnet und dienen dem Zweck, ein solches Paneel mit dem Träger zu verspannen. Zu diesem Zweck verfügt eine solche Befestigungsklemme über ein Anschlussteil. Das Anschlussteil trägt ein oder mehrere Anschluss-organe zum Anschließen des Anschlussteils und damit der Befestigungsklemme an einen solchen Träger. Die Anschlussorgane können ausgebildet sein, um den oberen Abschluss eines Trägers außenseitig zu umfassen, beispielsweise den oberen Gurt eines I-Trägers. Gemäß einer anderen Ausgestaltung sind die Anschlussorgane ausgebildet, damit diese in eine der Längserstreckung des Trägers folgende Nut eingebracht werden können. In beiden Fällen sind die Anschlussorgane ausgelegt, den Träger mit ihren Anschlussorganen klauenartig zu hintergreifen. Ist das Anschlussteil einer solchen Befestigungsklemme an einen Träger angeschlossen, ist durch das klauenartige Hintergreifen ein trägerseitiges Spannwiderlager bereitgestellt.

Neben dem Anschlussteil verfügt eine solche Befestigungsklemme über ein Klemmelement. Dieses ist in Spannwirkrichtung der Befestigungsklemme gegenüber dem Anschlussteil einrichtbar und damit verstellbar. Das Klemmelement umfasst einen Klemmschenkel mit einem daran angeformten Klemmfortsatz. Der Klemmfortsatz dient zum Übergreifen des oberen seitlichen Randes eines auf den Träger aufgelegten Paneels und bildet damit das mit dem trägerseitigen Spannwiderlager zusammenwirkende paneelseitige Spannwiderlager zum Befestigen eines solchen Paneels an dem Träger. Für die Bereitstellung des paneelseitigen Widerlagers mit dem Klemmfortsatz ist eine flächige Anlage gewünscht. Angeformt an den Klemmschenkel ist ferner ein Stützschenkel. Dieser erstreckt sich in Spannwirkrichtung und bildet mit dem Klemmschenkel ein Winkelstück. Der Stützschenkel dient zum Abstützen des Klemmelementes an dem Anschlussteil, um beim Spannen des Klemmelementes gegen das Anschlussteil bei auf der Oberseite des Paneels abgestütztem Klemmfortsatz ein Verkippen des Klemmschenkels mit seinem Klemmfortsatz zu unterbinden. Zu diesem Zweck verfügt das Anschlussteil über ein Stützwiderlager, auf dem der Stützschenkel des Klemmelementes beim Spannen der Befestigungsklemme abgestützt ist.

Als Spanneinrichtung dient bei einer solchen Befestigungsklemme zumeist ein Spannbolzen, der mit einer Spannmutter zusammenwirkt. Der Spannbolzen durchgreift den Klemmschenkel des Klemmelementes und kämmt ein dem Anschlussteil zugeordnetes Innengewinde, welches die Spannmutter bildet.

Eine Befestigungsklemme, wie vorstehend beschrieben, ist beispielsweise aus DE 20 2011 107 843 U1 oder EP 3 040 640 B1 bekannt. Das Stützwiderlager des Anschlussteils ist in beiden Fällen durch eine Zahnreihe bereitgestellt, in die eine an der Innenseite des Stützschenkels des Klemmelementes angeformte komplementäre Zahnreihe eingreift. Durch die Bereitstellung eines solchen Stützwiderlagers und der entsprechenden Abstützung des Stützschenkels daran ist eine Einrichtung des Abstandes zwischen dem Klemmfortsatz des Klemmelementes und dem Anschlussteil möglich. Mit einer solchen Befestigungsklemme lassen sich Photovoltaik-Module unterschiedlicher Höhe (Dicke) an einem Träger befestigen, wobei durch die Einrichtbarkeit zwischen Klemmelement und Anschlussteil die gewünschte Raumlage des Klemmelementes mit seinem Klemmfortsatz gegenüber der Oberseite des Photovoltaik-Moduls in seiner bestimmungsgemäßen Raumlage verbleibt. Infolge der Abstützung des Klemmelementes über seinen Stützschenkel auf der Abstützung des Anschlussteils ist ein Verkippen des Klemmelementes unterbunden.

Bei den vorstehend angesprochenen Befestigungsklemmen sind die einzelnen Bestandteile stranggepresste Profilabschnitte. Zwar lassen sich auf diese Weise die vorstehend beschriebenen Strukturen bereitstellen. Werden Strukturen benötigt, die nicht in Strangpressrichtung eines Bauteils verlaufen, muss hierfür entweder ein eigenes Bauteil bereitgestellt oder diese Strukturen müssen durch nachträgliche Bearbeitung erstellt werden. Ferner muss bei einer Montage derartiger Befestigungsklemmen beim Spannen auf eine bestimmungsgemäße Anordnung des Klemmelementes in seiner Raumlage aufgrund der geringen Eingriffstiefe der Zahnung des Stützschenkels in die als Spannwiderlager vorgesehene Zahnung des Anschlussteils geachtet werden. Die aus DE 20 2011 107 843 U1 vorbekannte Befestigungsklemme lässt sich infolge seiner den oberen Gurt eines Trägers umgreifenden Anschlussorgane nur in einer einzigen Orientierung an dem Träger anbringen. Die Befestigungsklemme gemäß EP 3 040 640 B1 verfügt neben dem Klemmelement und dem Anschlussteil über ein weiteres Element, welches bei dieser Ausgestaltung das Stützwiderlager trägt. Hierbei handelt es sich um ein Winkelstück, welches mit seinem oberen zu dem Klemmelement weisenden Schenkeln das Anschlussteil übergreift.

Ausgehend von diesem diskutierten Stand der Technik liegt der Erfindung die Aufgabe zugrunde, eine Befestigungsklemme vorzuschlagen, die sich nicht nur durch eine geringe Anzahl an handzuhabenden Einzelelementen auszeichnet, sondern die bei einer Ausbildung der Befestigungsklemme zum Verklemmen von Paneelen unterschiedlicher Dicke an einem Unterlager, bereitgestellt etwa durch zumindest zwei Profile, eine einhändige Handhabung derselben, insbesondere auch beim Spannen der Spanneinrichtung erlaubt. Auch soll diese Befestigungsklemme geeignet sein, um in unterschiedlichen Befestigungssituationen verwendet werden zu können.

Gelöst wird diese Aufgabe erfindungsgemäß durch eine eingangs genannte, gattungsgemäße Befestigungsklemme mit den weiteren Merkmalen des Anspruchs 1.

Bei dieser Befestigungsklemme wird das Stützwiderlager des Anschlussteils, an dem sich der Stützschenkel des Klemmelementes abstützt, wenn der Klemmfortsatz auf die Oberseite eines zu verspannenden Paneels wirkt, durch zumindest eine Abstützfläche bereitgestellt. Bereitgestellt werden kann eine solche Abstützfläche durch eine entsprechende Konturierung der in radialer Richtung nach außen weisenden freien Stirnfläche bzw. Stirnkante des Anschlussteils. Dabei ist im Rahmen dieser Ausführung als freie Stirnfläche auch eine Anlageseite des Anschlussteils zu verstehen, in welche diese Konturierung eingebracht ist. Gemäß einem anderen Ausführungsbeispiel ist die zumindest eine Abstützfläche durch Einschnitte in die freie Stirnfläche (Kante) zumindest eines in einer radialen Richtung abragenden Schenkels bereitgestellt. Durch die Konturierung wird wenigstens eine Abstützfläche bereitgestellt, auf der der Stützschenkel des Klemmelementes bei einer Verwendung der Befestigungsklemme als Seitenklemme abgestützt wird. Diese in Eingriffstellung zwischen Stützschenkel des Klemmelementes und Abstützfläche des Anschlussteils kann durch komplementäre Rillierungen in beiden Bauteilen ebenso realisiert sein wie dadurch, dass die Abstützflächen durch Einschnitte in quer zur Längserstreckung des Anschlussteils abragende Schenkel eingebracht sind, in die der Stützschenkel mit seinem Endabschnitt in der Spannposition eingreift. Um eine verlässliche Abstützung des Abstützschenkels an dem Stützwiderlager des Anschlussteils zu gewährleisten, ist vorzugsweise das freie Ende des Stützschenkels in Richtung zu dem Anschlussteil hin abgewinkelt. Typische Winkel, mit denen dieser Stützabschnitt gegenüber der Erstreckung des Stützschenkels abgewinkelt ist, liegen zwischen 30° und 60°. Bei einem typischen Ausführungsbeispiel ist ein Winkel von 45° vorgesehen. Die zum Bereitstellen der zumindest einen Abstützfläche des Anschlussteils vorgesehene Kontur kann aufgrund dieser Auslegung des Stützschenkels entsprechend tief ausgeführt sein, was eine verlässliche Abstützung gewährleistet.

Zusätzlich zu dem Anschlussteil, dem Klemmelement und der Spanneinrichtung verfügt diese Befestigungsklemme über einen am Anschlussteil gehaltenen Funktionskörper. Dieses zusätzliche Element, welches vorzugsweise ein Kunststoffteil ist, verfügt über zumindest einen Funktionsbereich. Somit kann über den Funktionskörper die Befestigungsklemme mit zusätzlichen Funktionalitäten ausgerüstet sein. Typischerweise wirkt ein solcher Funktionsbereich in radialer Richtung zur Längserstreckung des Anschlussteils nach außen. Bei einem solchen Funktionsbereich kann es sich beispielsweise um einen typischerweise flächig ausgeführten Anlagebereich für ein auf einem Träger oder einem anderen Unterlager zu montierendes Paneel, etwa einem Photovoltaikmodul, handeln. Durchaus kann ein solcher Funktionskörper an mehreren Seiten derartige Anlagebereiche aufweisen. Dieses wird man bei solchen Befestigungsklemmen vorsehen, die in zwei unterschiedlichen Modi eingesetzt werden können, mithin als Seitenklemme zum Verspannen eines einzelnen Paneels oder als Mittelklemme zum gleichzeitigen Verspannen von zwei benachbart zueinander angeordneten Paneelen. Ein solcher Anlagebereich kann als Anlagefläche ausgeführt sein. Ebenfalls ist es möglich, einen solchen Anlagebereich durch Anlagenoppen oder ähnliche Formkörper zu realisieren, an denen ein Paneel mit seiner seine Dicke bestimmenden Seitenfläche zur Anlage gelangt.

Ein solcher Funktionskörper kann auch andere Funktionsbereiche aufweisen, wie beispielsweise Führungsschenkel, an denen der Stützschenkel in Spannwirkrichtung beim Spannen des Klemmelementes gegenüber dem Anschlussteil geführt und hierdurch vorzugsweise auch das Klemmelement gegenüber dem Anschlussteil verdrehgesichert gehalten ist. Die Spannwirkrichtung ist diejenige Richtung, in der das Klemmelement gegenüber dem Anschlussteil verspannt wird. Wiederum andere oder auch dieselben Funktionsbereiche können ausgebildet sein, um Sorge dafür zu tragen, dass erst infolge einer vertikalen Verstellung des Klemmelementes gegenüber dem Anschlussteil der Stützabschnitt bei auf das Paneel mit seinem Klemmfortsatz wirkenden Klemmschenkel an eine Abstützfläche des Anschlussteils herangeführt wird. An einem solchen Funktionsbereich bzw. den diesen Funktionsbereich bildenden Elementen ist der Stützschenkel und damit das Klemmelement ohne einen Eingriff dieser beiden Teile bis zum Beginn des eigentlichen Spannvorganges gehalten. Damit kann der Klemmschenkel ohne weiteres zu dem Anschlussteil im Zuge eines Spannens der Befestigungsklemme bewegt werden, ohne dass die Gefahr besteht, dass der Stützschenkel einer der typischerweise mehreren in Spannwirkrichtung voneinander beabstandete Abstützflächen vor Beginn des eigentlichen Spannvorganges in Eingriff gestellt wird. Eine solche in Eingriffstellung beginnt erst mit der vorbeschriebenen Kippbewegung des Klemmelementes. Die Ausbildung der Funktionsbereiche zu anderen Zwecken als eines oder mehrere der vorgenannten ist selbstverständlich möglich. Beispielsweise kann ein solcher Funktionsbereich auch zum Zwecke einer Erleichterung bzw. Verbesserung einer Handhabung der Befestigungsklemme ausgebildet sein.

Vorzugsweise ist dieser Funktionskörper ein Kunststoffteil, typischerweise ein Kunststoffspritzgussteil. Daher können, wenn erforderlich, auch komplizierter Geometrien ebenso realisiert werden, wie elastisch oder plastisch nachgiebige Bestandteile davon.

Gemäß einem Ausführungsbeispiel verfügt der Funktionskörper zum Halten des Stützschenkels bzw. des Klemmelementes in einer Nichteingriffsstellung seines Stützabschnittes auf eine Abstützfläche des Anschlussteils über ein oder mehrere Halteelemente. Diese sind nachgiebig, typischerweise in radialer Richtung in Bezug auf die Spannwirkrichtung und wirken gegen die zum Anschlussteil weisende Seite des Stützschenkels. Dabei kann das Halteelement selbst nachgiebig sein und/oder dieses kann, wie in einem Ausführungsbeispiel vorgesehen, an einem in nachgiebigen, insbesondere elastisch nachgiebigen Stellarm des Funktionskörpers angeformt sein. Die Nachgiebigkeit des Halteelementes gewährleistet, dass das Klemmelement mit seinem Stützschenkel an eine Abstützfläche herangeführt werden kann, und zwar infolge einer Verkippung des Klemmelementes und damit seines Stützschenkels. Dieses erfolgt beim Spannen der Spanneinrichtung bei einem Einsatz der Befestigungsklemme als Seitenklemme selbsttätig. Gemäß einem bevorzugten Ausführungsbeispiel verfügt der Funktionskörper über zwei in einer Ebene voneinander beabstandete Halteelemente. Dies erlaubt eine Abstützung des Stützschenkels an zwei voneinander beabstandeten Stellen. Die Beabstandung erlaubt auch eine Ausgestaltung, dass jedes Halteelement an das freie Ende eines Stellarmes angeformt ist. Ein solches Halteelement kann nach Art eines Nockens ausgeführt sein. Selbstverständlich sind auch andere Ausgestaltungen möglich, beispielsweise ein als Leiste oder Wulst ausgeführtes Halteelement. Auch eine bogenförmige Auslegung eines solchen Halteelementes ist möglich. In einem solchen Fall kontaktiert dieses Halteelement im Bereich seines Scheitels die Innenseite des Stützschenkels.

Das Stützwiderlager des Anschlussteils ist typischerweise Teil eines Schenkels des Anschlussteils. Bei einer solchen Ausführung verfügt das Anschlussteil typischerweise über zwei derartige, durch einen Spalt voneinander getrennte Schenkel. Die Schenkel sind typischerweise spiegelsymmetrisch zu der zwischen den Schenkeln befindlichen Mittellängsebene des Anschlussteils ausgelegt. An den das Stützwiderlager tragenden Schenkel ist gemäß einer Ausgestaltung, winklig daran angrenzend, ein Spannwiderlagerschenkel angeformt, sodass dieser Schenkel mit dem Spannwiderlagerschenkel ein Winkelstück bildet. Bei einer Ausgestaltung des Anschlussteils mit zwei Schenkeln, sind beide durch den Spannwiderlagerschenkel miteinander verbunden. Der Spannwiderlagerschenkel bildet den oberen, zum Klemmelement weisenden Abschluss des Anschlussstückes. Daher eignet sich dieser zum Abstützten des Führungskörpers, der sodann mit einer Grundplatte darauf abgestützt ist. Zweckmäßig ist eine Ausgestaltung, bei der an die Grundplatte des Funktionskörpers in Richtung zum Fuße des Anschlussteils abragende Wände vorgesehen sind, durch die zusammen mit der Grundplatte eine Anschlussteilaufnahme bereitgestellt ist. Diese umgreift des Anschlussteil in Umfangsrichtung zumindest teilweise. Hierdurch ist der Funktionskörper drehmomentschlüssig mit dem Anschlussteil verbunden.

Bei einer bevorzugten Ausführung dieser Befestigungsklemme ist das Anschlussteil als Stanzbiegeteil ausgeführt. Ein solches Teil kann kostengünstig hergestellt werden. Bei einer solchen Auslegung des Anschlussteils ist das Stützwiderlager durch typischerweise zwei mit ihren Abstützflächen in Querrichtung zur Spannrichtung voneinander beabstandete Stützwiderlagerschenkel realisiert. Die Abstützflächen sind als Kontur in die freien Endflächen der Stützwiderlagerschenkel eingebracht. Die beiden Stützwiderlagerschenkel sind durch einen der Längserstreckung des Anschlussteils folgenden Materialstreifen miteinander verbunden. Dieser Materialstreifen geht typischerweise in den bereits vorbeschriebenen Spannwiderlagerschenkel über.

Bei einer solchen Auslegung des Anschlussteils der Befestigungsklemme bietet es sich an, dass die Stützwiderlagerschenkel in ihrem dem Spannwiderlagerschenkel gegenüberliegenden Endabschnitt jeweils ein Anschlussorgan zum Anschließen der Befestigungsklemme an ein Unterlager, beispielsweise ein Montageprofil, trägt. Diese Anschlussorgane sind nach au-βen ausgestellt und geeignet, in den Hinterschnitt einer Montage- oder Kedernut einzugreifen. Bei einer Auslegung des Anschlussteils mit zwei durch einen Spalt voneinander getrennten Schenkeln sind die Anschlussorgane der Schenkel voneinander weg gerichtet. Der zwischen den Schenkeln befindliche Spalt kann zum Einclipsen des Anschlussteils in eine Montagenut genutzt werden. Zugleich ist hierdurch ein Drehen der Befestigungsklemme, wenn mit seinen Anschlussorganen in eine solche Montagenut eingesetzt, möglich. Durch Drehen der Befestigungsklemme gegenüber der Montagenut wird durch ihre Ausrichtung zu dem oder den Paneelen der Einsatzzweck bzw. ihre Verwendungsart bestimmt, entweder als Seitenklemme oder als Mittelklemme.

Das Stützwiderlager des Anschlussteils weist typischerweise mehrere in Spannwirkrichtung voneinander beabstandete Abstützflächen auf. Dieses gilt auch für eine Auslegung, bei der das Stützwiderlager durch zwei voneinander beabstandete Stützwiderlagerschenkel bereitgestellt ist. Ein Eingriff des Stützschenkels mit dem Stützwiderlager erfolgt dann in Abhängigkeit von der Dicke des zu montierenden Paneels.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht nach Art einer Explosionsdarstellung einer erfindungsgemäßen Befestigungsklemme,
- **Fig. 1a:**: ein der Befestigungsklemme der Figur 1 zugehöriger Funktionskörper in einer perspektivischen Alleindarstellung,
- **Fig. 2:**: die Befestigungsklemme der Figur 1 in ihrem Auslieferungszustand vor einer Benutzung,
- **Fig. 3:**: die Befestigungsklemme der Figur 2 mit ausgeblendetem Funktionskörper,
- **Fig. 4:**: eine Ansicht auf die Befestigungsklemme der vorstehenden Figuren von unten,
- **Fig. 5:**: eine Seitenansicht der Befestigungsklemme der vorstehenden Figuren bei einer Verwendung als Seitenklemme,
- **Fig. 6:**: die Befestigungsklemme der Figur 5 für sich alleine und mit ausgeblendetem Funktionskörper und
- **Fig. 7:**: die Befestigungsklemme der vorstehenden Figuren bei einem Einsatz als Mittelklemme.

Eine Befestigungsklemme 1 dient zum Befestigen eines Paneels, etwa eines Photovoltaik-Moduls an einem Unterlager, typischerweise einem durch ein Profil bereitgestellten Träger. Die Befestigungsklemme 1 umfasst ein trägerseitiges Anschlussteil 2, ein Klemmelement 3 sowie als Spanneinrichtung einen Spannbolzen 4 und bei dem dargestellten Ausführungsbeispiel einen Innengewindedurchzug 5 als Teil des Anschlussteils 2, dessen Innengewinde der Spannbolzen 4 kämmt. Das Anschlussteil 2 des dargestellten Ausführungsbeispiels verfügt über zwei Schenkel 6, 6.1, die durch einen Spannwiderlagerschenkel 7 miteinander verbunden sind. Die Schenkel 6, 6.1 sind parallel zueinander und mit Abstand voneinander an den Spannwiderlagerschenkel 7 angeformt. Die beiden Schenkel 6, 6.1 sind durch einen Spalt voneinander getrennt. Dieses erlaubt eine Verstellung der dem Spannwiderlagerschenkel 7 gegenüberliegenden Endabschnitte der beiden Schenkel 6, 6,1 gegeneinander.

Der Schenkel 6 trägt zwei Stützwiderlagerschenkel 8, 8.1. Diese erstrecken sich mit ihrer ebenen Erstreckung in Spannwirkrichtung, mithin in derjenigen Richtung, in der eine Verspannung des Klemmelementes 3 gegenüber dem Anschlussteil 2 erfolgt. Teil des Schenkels 6 sind an seinem unteren Abschluss zwei Anschlusshaken 9, 9.1 als Anschlussorgane. Bei dem dargestellten Ausführungsbeispiel sind diese Teil des jeweiligen Stützwiderlagerschenkels 8. Die beiden Stützwiderlagerschenkel 8, 8.1 sind durch einen Materialstreifen 10 miteinander verbunden. Der Materialstreifen 10 ist mit einer konkaven Innenseite und einer konvexen Außenseite gekrümmt ausgeführt. Auf diese Weise wird Raum für den Eingriff des Gewindeschaftes 11 des Spannbolzens 4 bereitgestellt. Die beiden Anschlusshaken 9, 9.1 sind bei dem dargestellten Ausführungsbeispiel parallel zueinander hinsichtlich ihrer flächigen Erstreckung angeordnet. Diese ragen von dem Schenkel 6 etwa parallel zur Ebene des Spaltes zwischen den beiden Schenkeln 6, 6.1 ab. Ihre jeweils nach oben weisende Fläche 12, 12.1 dient als Widerlagerfläche, wenn das Anschlussteil 2 in eine Montagenut eines Trägers eingesetzt ist. Dann hintergreifen die Anschlusshaken 9, 9.1 mit ihren Widerlagerflächen 12, 12.1 die Öffnung einer in einem Träger befindlichen Montagenut oder einer darin eingebrachten Öffnung. Die Stützwiderlagerschenkel 8, 8.1 sind bei dem dargestellten Ausführungsbeispiel ebenfalls parallel zueinander und mit einem Winkel bzgl. ihrer flächigen Erstreckung zu den Anschlusshaken 9, 9.1 angeordnet. Jeder Stützwiderlagerschenkel 8, 8.1 verfügt über eine Konturierung seiner radial nach außen weisenden Stirnfläche zur Ausbildung von mehreren, in Spannwirkrichtung voneinander beabstandeten Abstützflächen 13. Diese sind als Einschnitte in diese Stirnfläche ausgeführt. Die Einschnitte sind asymmetrisch, wobei jeweils die untere Flanke eines solchen Einschnittes eine Abstützfläche 13 bildet. Diese sind in radiale Richtung nach innen hin in Richtung von dem Klemmelement 3 weg mit einer geringen Neigung ausgeführt.

Der Innengewindedurchzug 5 erstreckt sich bis in eine an den Spannwiderlagerschenkel 7, beispielsweise infolge einer Bördelung angeformte Hülse 14.

Der Schenkel 6.1 des Anschlussteils 2 verfügt anstelle der beiden Stützwiderlagerschenkel 8, 8.1 über zwei Stützschenkel 39, 39.1. Diese ragen von dem die Schenkel 6, 6.1 trennenden Spalt in radialer Richtung und in der Flucht des jeweilig gegenüberliegenden Stützwiderlagerschenkels 8 bzw. 8.1 ab. Diese sind endseitig zum Bereitstellen einer in radialer Richtung nach außen wirkenden Anlagefläche abgekantet, und zwar in Richtung der Erstreckung der auch an diesem Schenkel 6.1 angeformten Anschlusshaken 9.2, 9.3.

Das Anschlussteil 2 des dargestellten Ausführungsbeispiels ist als Stanzbiegeteil aus einer Stahlblechplatine hergestellt, vorzugsweise aus einer rostfreien Stahllegierung.

Das Klemmelement 3 ist ebenso wie das Anschlussteil 2 ein Stanzbiegeteil aus einer rostfreien Stahllegierung. Das Klemmelement 3 verfügt über einen Klemmschenkel 18 und einen winklig daran angeformten Stützschenkel 19. In den Klemmschenkel 18 ist eine Durchbrechung 20 für den Durchgriff des Gewindeschaftes 11 des Spannbolzens 4 eingebracht. Angeformt an den Klemmschenkel 18 sind bei dem dargestellten Ausführungsbeispiel drei Klemmfortsätze 21, 22, 22.1. Der Klemmfortsatz 21 ist an den Klemmschenkel 18 an seiner dem Stützschenkel 19 gegenüberliegenden Seite angeformt. Die Klemmfortsätze 21, 22, 22.1 überragen die äußere Mantelfläche des Anschlussteils 2 und greifen bei einer Verwendung der Befestigungsklemme 1 zum Verspannen eines Paneels an einem Träger über die Oberseite des Paneels, also beispielsweise den Rahmen eines Photovoltaik-Moduls. Der Klemmfortsatz 21 ist gegenüber der Ebene des Klemmschenkels 18 in Richtung zu dem zu verspannenden Paneel geneigt. Der Klemmfortsatz 21 weist eine rechteckförmige Umrissgeometrie auf. Seine freien Eckbereiche sind verprägt, um nach unten und somit in Richtung zum Anschlussteil 2 hin weisende Eindrückkrallen 23 bereitzustellen. Der Klemmschenkel 18 ist im Übergang zu seinen Klemmfortsätzen 21, 22, 22.1 durch eine darin eingeprägte Sicke 24 versteift.

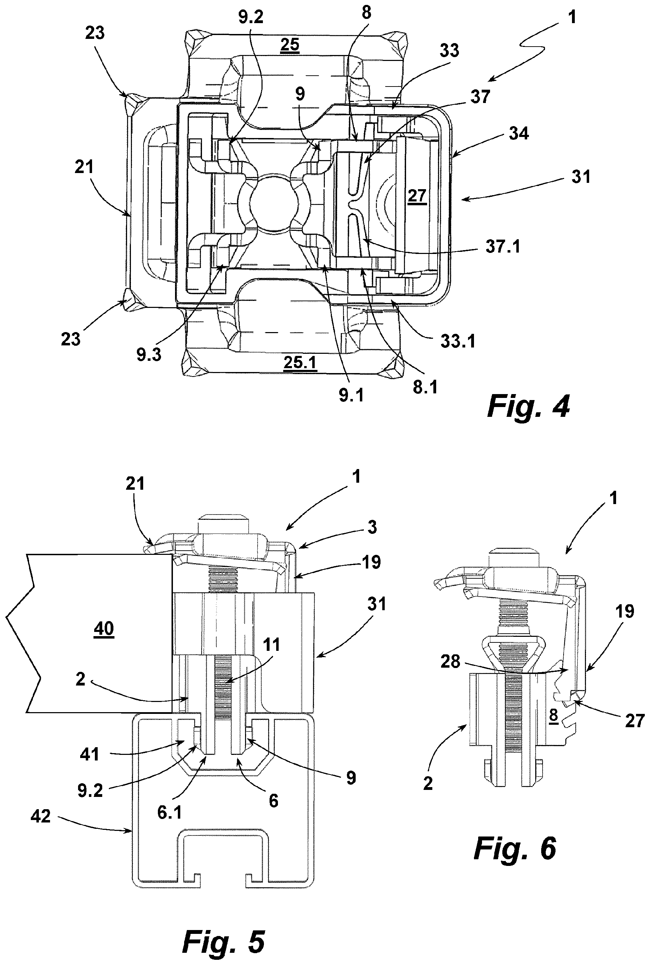

Die beiden weiteren Klemmfortsätze 22, 22.1 sind einander in Bezug auf dem Klemmschenkel 18 gegenüberliegend angeordnet und übergreifen das Anschlussteil 2 in Querrichtung zu der Richtung, in der der Klemmfortsatz 21 das Anschlussteil 2 übergreift. Die Klemmfortsätze 22, 22.1 sind prinzipiell ebenso konzipiert wie der Klemmfortsatz 21. Die Klemmfortsätze 22, 22.1 weisen ebenso wie der Klemmfortsatz 21 unterseitig einen Kontaktflächenbereich 25, 25.1 auf, mit dem diese zum Verspannen eines Paneels an dessen Oberseite anliegen. Von Besonderheit bei den Klemmfortsätzen 22, 22.1 ist, dass der Kontaktflächenbereich 25, 25.1 gegenüber der Ebene des Klemmschenkels 18 geneigt ist, und zwar in Richtung zu dem Stützschenkel 19 hin (siehe Figuren 5 und 6). Damit reduziert sich der Abstand der Kontaktfläche 25, 25.1 in dieser Richtung. Die Kontaktfläche des Klemmfortsatzes 21 verläuft hingegen parallel zur Ebene des Klemmschenkels 18.

Der Stützschenkel 19 erstreckt sich in Spannwirkrichtung. Zum Versteifen desselben dient eine darin eingebrachte seiner Längserstreckung folgende Sicke 26. Der untere Endabschnitt des Stützschenkels 19 ist in Richtung zu dem Anschlussteil 2 hin abgewinkelt. Dieser Abschnitt stellt den Stützabschnitt 27 des Stützschenkels 19 dar, dessen freies Ende zum Abstützen des Klemmelementes 3 an dem durch das Anschlussteil 2 durch die Abstützflächen 13 bereitgestellten Spannwiderlager bei einer Verwendung der Befestigungsklemme zum Verspannen eines Paneels mit dem Klemmfortsatz 21 abgestützt ist.

Neben dem Anschlussteil 2, dem Klemmelement 3 und der aus Spannbolzen 4 und Innengewindedurchzug 5 gebildeten Spanneinrichtung verfügt die Befestigungsklemme 1 ferner über einen Funktionskörper 31. Der Funktionskörper 31 ist bei dem dargestellten Ausführungsbeispiel ein Kunststoffspritzgussteil. Der Funktionskörper 31 ist auf der Oberseite des Spannwiderlagerschenkels 7 abgestützt, und zwar mit einer Grundplatte 32. Diese verfügt über eine Durchbrechung, in die die Hülse 14 des Innengewindedurchzuges 5 eingreift. An die Grundplatte 32 sind in Richtung zu dem Anschlussteil 2 weisende Wände angeformt, durch die zusammen mit der Grundplatte 32 eine Anschlussteilaufnahme gebildet ist. Die an die Grundplatte 32 angeformten Wände umgreifen das Anschlussteil 2 in seinem oberen Abschnitt zumindest teilweise. Damit sitzt der Funktionskörper 31 drehmomentschlüssig auf dem Anschlussteil 2.

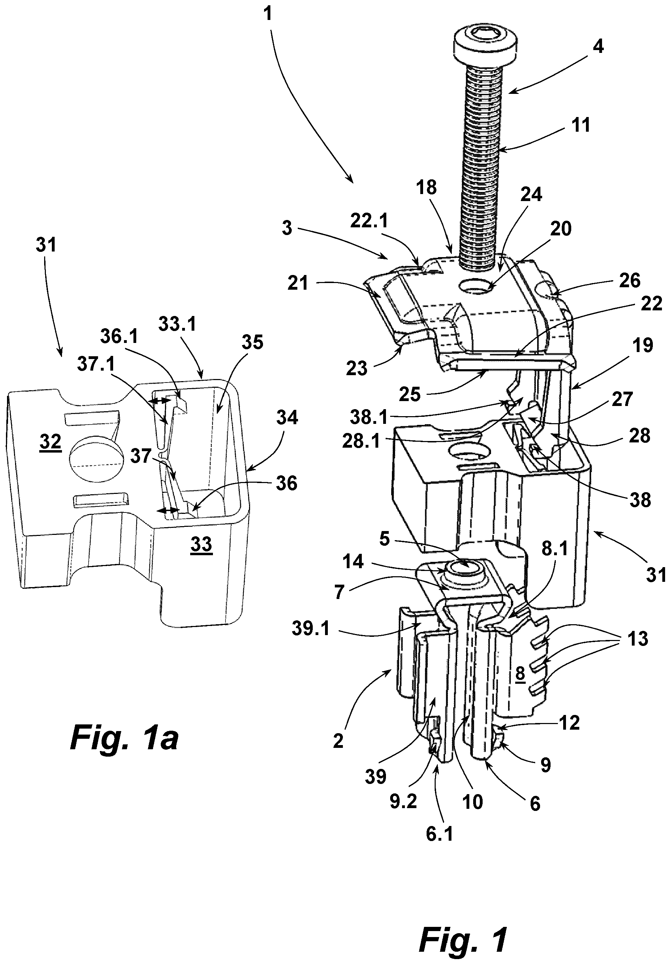

Der Funktionskörper 31 ist aus einer anderen Perspektive in Alleinstellung in Figur 1a gezeigt. Der Funktionskörper 31 weist eine etwa rechteckförmige Grundfläche auf. Drei dieser Seiten stellen als Funktionsbereich jeweils eine Anlagefläche für ein mit der Befestigungsklemme 1 zu verspannendes Paneel, insbesondere eines Photovoltaik-Moduls, bereit. Hierbei handelt es sich um die in den Figuren 1 und 1a nach links weisende Wand des Funktionskörpers 31 sowie die Vorderseite und die Rückseite desselben. An dieser können zu verspannende Paneele abgestützt sein. Der Funktionskörper 31 verfügt über zwei weitere Funktionsbereiche. Zum einen handelt es sich um zwei parallel zu jeweils einer zu den Führungswangen 28, 28.1 des Stützschenkels 19 angeordneten Führungsschenkel 33, 33.1. Zwischen den Führungsschenkeln 33, 33.1 und den Führungswangen 28, 28.1 ist jeweils ein Bewegungsspalt vorgesehen. Die Führungsschenkel 33, 33.1 dienen zum Führen des Stützschenkels 19 und damit des Klemmelementes, wenn dieses in Spannwirkrichtung zum Einrichten des Abstandes des Klemmelementes 3 gegenüber dem Anschlussteil 2 verstellt wird, insbesondere beim Einschrauben des Spannbolzens 4. Diese beiden Führungsschenkel 33, 33.1 sind durch einen Wandabschnitt 34 verbunden. Der Wandabschnitt 34 erstreckt sich um die Außenseite des Stützschenkels 19. Damit ist durch die Führungsschenkel 33, 33.1 und den Wandabschnitt 34 für den Stützschenkel 19 eine in Umfangsrichtung verlaufende Einhausung bereitgestellt. Ihr Inneres bildet einen Führungskanal 35. In den Führungskanal 35 seitlich eingreifend befinden sich bei dem dargestellten Ausführungsbeispiel zwei Haltenocken 36, 36.1, und zwar jeweils an einem Stellarm 37, 37.1 angeformt. Die Haltenocken 36, 36.1 sind jeweils an das jeweils freie Ende des jeweiligen Stellarms 37 bzw. 37.1 angeformt. Die Stellarme 37, 37.1 erstecken sich von einem gemeinsamen Wurzelbereich am Funktionskörper 31 etwa diametral voneinander wegweisend. Über die Stellarme 37, 37.1 sind die Haltenocken 36, 36.1 in Querrichtung zur Spannwirkrichtung, wie in Figur 1a durch die Doppelpfeile angedeutet, elastisch verstellbar. Die Elastizität resultiert aus dem für die Ausbildung des Funktionkörpers 31 eingesetzten Kunststoffmaterials. Die Haltenocken 36, 36.1 greifen in der herstellerseitig eingerichteten Auslieferungsstellung der Befestigungsklemme 1 jeweils in eine Halteausnehmung 38, 38.1 der Führungswangen 28, 28.1 ein. Somit ist das Klemmelement 3 über seinen Stützschenkel 19 in Spannwirkrichtung an dem Funktionskörper 31 bzw. seinen Haltenocken 36, 36.1 gehalten.

Die in Richtung zu dem Klemmschenkel 18 weisende Flanke der Halteausnehmungen 38, 38.1 wird durch einen Materialvorsprung der jeweiligen Führungswange 28, 28.1 gebildet. Die nach unten weisende Flanke dieser Materialvorsprünge sowie die nach oben weisende Fläche der Haltenocken 36, 36.1 sind als Stellflächen komplementär zueinander ausgeführt, um eine lösbare Rastung herbeizuführen. Wird das Klemmelement 3 in Richtung zu dem Anschlussteil 2 in Spannwirkrichtung verstellt, wirkt dieses auf die Haltenocken 36, 36.1, die aufgrund der miteinander kooperierenden Stellflächen zurückbewegt werden, damit der jeweilige Materialvorsprung an diesen vorbeibewegt werden kann. Aufgrund der elastischen Rückstellkräfte liegt anschließend der Stützschenkel 19 wiederum an den Haltenocken 36, 36.1 an. Diese Abstützanordnung ist so ausgelegt, dass der Stützabschnitt 27 des Stützschenkels 19 nicht in Kontakt mit einer Abstützfläche 13 gelangt, mithin nicht in eine die freie Stirnfläche der Stützwiderlagerschenkel 8, 8.1 eingreifende Konturierung eingreift.

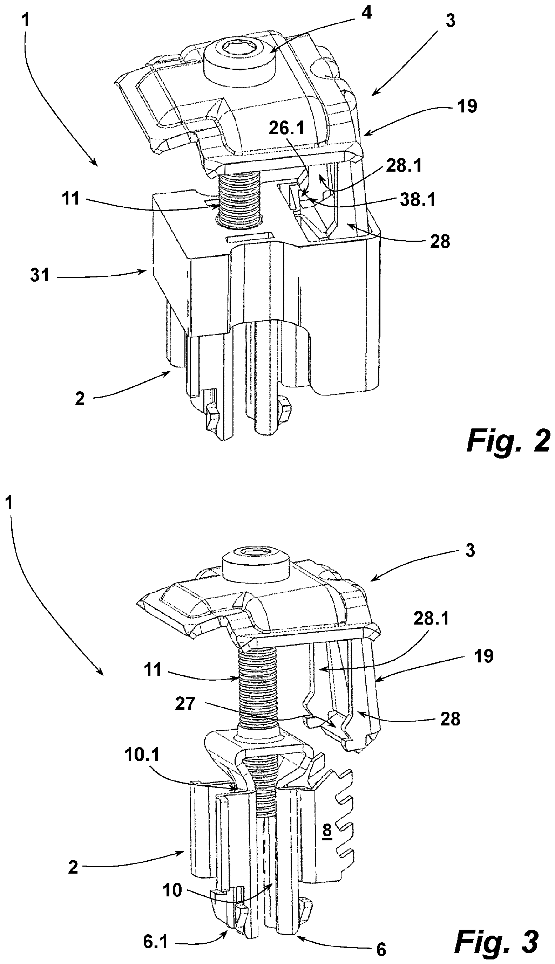

Figur 2 zeigt die Befestigungsklemme 1 im Zusammenbau ihrer Einzelbestandteile in der Auslieferungsstellung des Klemmelementes 3 gegenüber dem Anschlussteil 2, in der diese beiden Teile durch die in die Halteausnehmung 38, 38.1 eingreifenden Haltenocken 36, 36.1 gehalten sind. Dass in dieser Stellung des Klemmelementes 3 gegenüber dem Anschlussteil 2 beide Teile nicht miteinander in Eingriff gestellt sind, ist in Figur 3 zu erkennen, in der der Funktionskörper 31 ausgeblendet ist. Der Spannbolzen 4 kämmt das Innengewinde des Innengewindedurchzuges 5 und erstreckt sich in dieser Stellung nur bis in den oberen, zum Klemmelement 3 weisenden Endabschnitt der die Schenkel verbindenden Materialstreifen 10, 10.1 der Schenkel 6, 6.1. Die Schenkel 6, 6.1 des Anschlussteils 2 können im Bereich ihrer durch die Anschlusshaken 9, 9.1, 9.2, 9.3 tragenden Abschnitte ohne Weiteres gegeneinander verstellt werden, damit das Anschlussteil 2 und damit die Befestigungsklemme 1 an einen Träger durch Einbringen der Anschlussorgane in eine hinterschnittene Montagenut angeschlossen werden kann.

Die in Figur 4 gezeigte Ansicht der Befestigungsklemme 1 von unten lässt die parallele Ausrichtung der Anschlusshaken 9, 9.2 und 9.1, 9.3 der beiden Schenkel 6, 6.1 erkennen. Diese sind ausgehend von dem jeweiligen Materialstreifen 10, 10.1 zunächst in dieselbe Richtung abgewinkelt wie die Stützwiderlagerschenkel 8, 8.1 des Schenkels 6 bzw. die diesen entsprechenden Schenkel 39, 39.1 des Schenkels 6.1. Die radiale Erstreckung dieser Abwinklungen ist sehr kurz gehalten und bildet mit dem jeweiligen Anschlusshaken 9, 9.1, 9.2, 9.3 einen insgesamt S-förmigen Verlauf. Der Stützabschnitt 27 befindet sich in radialer Richtung beabstandet von den Stützwiderlagerschenkeln 8, 8.1 des Anschlussteils 2. Der Funktionskörper 31 umgreift mit seinen Seitenwänden das Anschlussteil 2 und den Stützschenkel 19 des Klemmelementes 3. In dieser Darstellung ist auch die Führung des Stützschenkels 19 anhand seiner Führungswangen 28, 28.1 an den Innenseiten der Führungsschenkel 33, 33.1 des Funktionskörpers 51 erkennbar.

Aus der in Figur 4 gezeigten Unteransicht wird deutlich, dass die Führungswangen 28, 28.1 des Stützschenkels 19 eine Verdrehsicherung des Klemmelementes 3 gegenüber dem Anschlussteil 2 nicht bewirken können, da zwischen diesen Teilen ein hinreichend großer Spalt vorgesehen ist.

Zum Befestigen bzw. Verspannen eines Paneels, welches bei dem dargestellten Ausführungsbeispiel ein Photovoltaik-Modul 40 ist, wird zunächst die Befestigungsklemme 1 mit dem unteren, die Anschlusshaken 9, 9.1, 9.2, 9.3 tragenden Abschnitt in eine hinterschnittene Montagenut 41 eines Trägerprofils 42 eingesetzt (s. Figur 5). Die Unterseiten der Stützwiderlagerschenkel 8, 8.1 sowie der Schenkel 39, 39.1 bilden einen Anschlag zum Begrenzen der Einsteckbewegung. In einem nächsten Schritt wird das Photovoltaik-Modul 40 positioniert. Anschließend wird die Befestigungsklemme 1, die in dem in Figur 5 gezeigten Ausführungsbeispiel als Seitenklemme eingesetzt ist, gespannt. Im Zuge des Spannens des Spannbolzens 4 wird das Klemmelement 3 in Richtung zu dem Anschlussteil 2 und damit in Spannwirkrichtung verstellt. Damit einhergehend wird der Gewindeschaft 11 der Spannschraube 4 zwischen die Materialstreifen 10, 10.1 der Schenkel 6, 6.1 eingeschraubt. Während dieser gesamten Bewegung ist der Stützschenkel 19 mit seinem Stützabschnitt 27 in radialer Richtung von den Stützwiderlagerschenkeln 8, 8.1 des Anschlussteils 2 beabstandet, behindert mithin diese Verstellbewegung des Klemmelementes 3 gegenüber dem Anschlussteil 2 nicht. Erst wenn der Klemmfortsatz 21 des Klemmelementes 3 die Oberseite des Photovoltaik-Moduls 40 kontaktiert, wird das Klemmelement 3 verstellt, und zwar derart, dass sein Stützschenkel 19 mit seinem Stützabschnitt 27 in Richtung zur Spannschraube 4 hin verstellt wird. Dies erfolgt gegen die Rückstellkraft der Haltenocken 36, 36.1 bzw. der Haltearme 37, 37.1. Im Zuge dieser Bewegung wird der Stützabschnitt 27 in Kontakt mit jeweils einer Abstützfläche 13 der Stützwiderlagerschenkel 8, 8.1 in Eingriff gestellt, um die durch den Stützschenkel 19 gewünschte, gegenüber dem Photovoltaik-Modul 40 rückseitige Abstützung zu gewährleisten.

Figur 5 zeigt die Befestigungsklemme 1 mit dem gegenüber dem Trägerprofil 42 verspannten Photovoltaik-Modul 40. Das Photovoltaik-Modul 40 liegt stirnseitig an den Klemmfortsätzen 22, 22.1 ebenso an, wie an der zu dem Photovoltaik-Modul 40 weisenden Seite des Funktionskörpers 31. Durch den zwischen die Schenkel 6, 6.1 eingebrachten Gewindeschaft 11 ist mit der Montagebewegung zugleich der Anschluss der Befestigungsklemme 1 an das Trägerprofil 42 gesichert, da die Endabschnitte der Schenkel 6, 6.1 nicht mehr hinreichend aufeinander zubewegt werden können, damit die Befestigungsklemme 1 aus der Montagenut 41 herausgezogen werden kann.

Figur 6 zeigt in einer Alleinstellung die Befestigungsklemme 1 in ihrer in Figur 5 gezeigten, das Photovoltaik-Modul 40 verspannenden Stellung, jedoch mit ausgeblendetem Funktionskörper 31. Deutlich erkennbar ist der Eingriff des Stützabschnittes 27 in den Stützwiderlagerschenkel 8 des Anschlussteils 2.

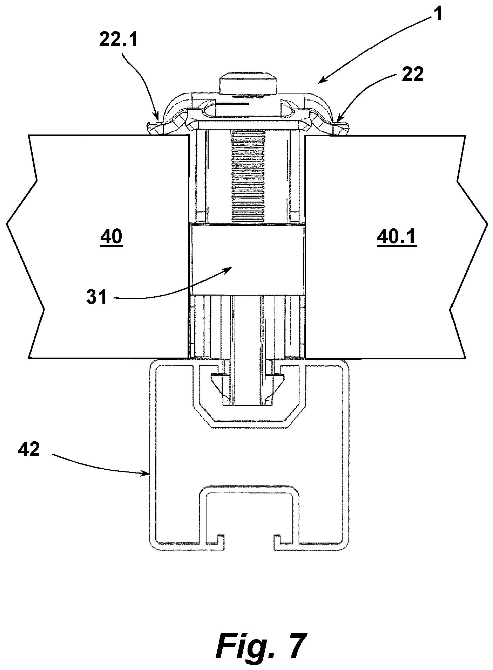

Die Klemmfortsätze 22, 22.1 der Befestigungsklemme 1 dienen dem Zweck, damit die Befestigungsklemme 1 nicht nur als Seitenabschlussklemme, wie in der Figur 5 gezeigt, eingesetzt werden kann, sondern auch als Mittelklemme. Ein solcher Einsatz der Befestigungsklemme 1 ist in Figur 7 dargestellt. Als Mittelklemme eingesetzt, übergreift das Klemmelement 3 mit jeweils einem Klemmfortsatz 22 bzw. 22.1 den Rand jeweils eines Paneels 40, 40.1. Auf diese Weise werden beide Paneele 40, 40.1 mit einer einzigen Befestigungsklemme 1 an einem Befestigungspunkt an dem Träger 42 befestigt bzw. mit diesem verspannt. Bei einer solchen Verwendung der Befestigungsklemme 1 wird der Eingriff des Stützschenkels 19 mit seinem Stützabschnitt 27 in ein Stützwiderlager des Anschlussteils 2 nicht benötigt. Ein Verkippen des Klemmelementes 3 ist dadurch zusätzlich gesichert, dass dessen beide einander gegenüberliegende Klemmfortsätze 22, 22.1 jeweils auf der Oberseite eines Paneels 40, 40.1 gleicher Dicke (Höhe) abgestützt sind. Bei einer solchen Verwendung der Befestigungsklemme 1 kommen die geneigt konzipierten Kontaktflächen 25, 25.1 der Klemmfortsätze 22, 22.1 zum Tragen. Da sich diese an der Oberfläche des jeweils benachbarten Paneels 40 bzw. 40.1 anliegen, wird der Stützschenkel 19 mit seinem Stützabschnitt 27 von dem durch die Stützwiderlagerschenkel 8, 8.1 mit ihren Abstützflächen 13 bereitgestellten Stützwiderlager nach außen wegbewegt. Ein bestimmungsgemäßes Verspannen der beiden Paneele 40, 40.1 mit der Befestigungsklemme 1 ist daher nicht durch einen unabsichtlichen Eingriff des Stützabschnittes 27 des Klemmelementes 3 in das vom Anschlussteil 2 bereitgestellte Stützwiderlager blockiert.

In einem in den Figuren nicht dargestellten Ausführungsbeispiel sind die einander bzgl. des Klemmschenkels gegenüberliegenden für eine Verwendung als Mittelklemme erforderlichen Klemmfortsätze nicht wie bei dem vorbeschriebenen Ausführungsbeispiel geneigt. Dieses ist möglich, da ein Eingriff des Stützschenkels in das Stützwiderlager des Anschlussteils bereits durch die Abstützung an den Haltenocken bewirkt ist und bei einem Einsatz der Befestigungsklemme als Mittelklemme keine Verstellbewegung auf den Stützschenkel wirkt, der dessen Stützabschnitt in radialer Richtung zum Stützwiderlager bewegt werden würde. Auch können sämtliche Klemmfortsätze prinzipiell in einer Ebene befindlich angeordnet sein.

Auch wenn in den vorstehenden Ausführungen als beispielhaftes Paneel ein Photovoltaik-Modul angegeben ist, eignet sich diese Befestigungsklemme auch zum Befestigen jedweder anderer Paneele, mithin von Elementen mit einer flächigen Erstreckung. Hierbei kann es sich auch um Steinplatten, Solarmodule oder anderweitige Bauelemente mit einer solchen flächigen Erstreckung handeln.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen näher erläutert werden müsste.

**Bezugszeichenliste**

| | | | |
|---|---|---|---|
| 1 | Befestigungsklemme | 33, 33.1 | Führungsschenkel |
| 2 | Anschlussteil | 34 | Wandabschnitt |
| 3 | Klemmelement | 35 | Führungskanal |
| 4 | Spannbolzen | 36, 36.1 | Haltenocke |
| 5 | Innengewindedurchzug | 37,37,1 | Stellarm |
| 6,6.1 | Schenkel | 38,38.1 | Halteausnehmung |
| 7 | Spannwiderlagerschenkel | 39, 39.1 | Schenkel |
| 8, 8.1 | Stützwiderlagerschenkel | 40, 40.1 | Photovoltaik-Modul |
| 9, 9.1, 9.2, 9.3 | Anschlusshaken | 41 | Montagenut |
| 10, 10.1 | Materialstreifen | 42 | Trägerprofil |
| 11 | Gewindeschaft | | |
| 12, 12.1 | Widerlagerfläche | | |
| 13 | Abstützfläche | | |
| 14 | Hülse | | |
| 18 | Klemmschenkel | | |
| 19 | Stützschenkel | | |
| 20 | Durchbrechung | | |
| 21 | Klemmfortsatz | | |
| 22,22.1 | Klemmfortsatz | | |
| 23 | Eindrückkralle | | |
| 24 | Sicke | | |
| 25, 25.1 | Kontaktflächenbereich | | |
| 26 | Sicke | | |
| 27 | Stützabschnitt | | |
| 28, 28.1 | Führungswange | | |
| 31 | Funktionskörper | | |
| 32 | Grundplatte | | |

## Patentansprüche

1. Befestigungsklemme zum Befestigen eines Paneels, etwa eines Photovoltaik-Moduls (40), an einem Träger (42), welche Befestigungsklemme (1)
- ein Anschlussteil mit wenigstens einem Anschlussorgan (9, 9.1, 9.2, 9.3) zum Anschließen der Befestigungsklemme (1) an den Träger (42) zum Ausbilden eines Spannwiderlagers und mit einem Stützwiderlager,
- ein gegenüber dem Anschlussteil (2) einrichtbares Klemmelement (3) mit einem einen Klemmfortsatz (21) zur Anlage an einem zu befestigenden Paneel (40) aufweisenden Klemmschenkel (18) und mit einem Stützschenkel (19) zum Abstützen des Klemmelements (3) auf dem Stützwiderlager des Anschlussteils (2), wobei der Klemmfortsatz (21) dem Stützschenkel (19) gegenüberliegend angeordnet ist und
- eine Spanneinrichtung (4, 5) zum Spannen des Klemmelementes (3) gegenüber dem Anschlussteil (2)
umfasst,
**dadurch gekennzeichnet, dass** das Stützwiderlager zumindest eine Abstützfläche (13) aufweist und der Stützschenkel (19) des Klemmelementes (3) einen Stützabschnitt (27) aufweist, mit dem er auf einer Abstützfläche (13) des Stützwiderlagers, wenn in einer Spannstellung befindlich, abgestützt ist, und dass die Befestigungsklemme (1) ferner einen am Anschlussteil (2) gehaltenen Funktionskörper (31) mit zumindest einem Funktionsbereich aufweist.

2. Befestigungsklemme nach Anspruch 1, **dadurch gekennzeichnet, dass** der zumindest eine Funktionsbereich ein nachgiebiges, gegen die zu dem Anschlussteil (2) weisende Seite des Stützschenkels (19) wirkendes Haltelement (36, 36.1) umfasst, durch den der Stützschenkel (19) bei nicht verspannender Wirkung der Spanneinrichtung (4, 5) in einer Stellung gehalten ist, dass sein Stützabschnitt (27) nicht mit dem Stützwiderlager des Anschlussteils (2) in Eingriff gestellt ist, und welches Halteelement (36, 36.1) beim Verspannen des Klemmelementes (3) mit dem Anschlussteil (2) bei auf das Paneel wirkendem Klemmfortsatz (21) und einer dadurch bedingten Verstellung des Stützschenkels (19) in radialer Richtung nach innen verstellt wird, sodass der Stützabschnitt (27) mit dem Stützwiderlager des Anschlussteils (2) in Eingriff stellbar ist.

3. Befestigungsklemme nach Anspruch 2, **dadurch gekennzeichnet, dass** das zumindest eine Halteelement (36, 36.1) an einen in radialer Richtung nachgiebigen, insbesondere elastisch nachgiebigen Stellarm (37, 37.1) des Funktionskörpers (31) angeformt ist.

4. Befestigungsklemme nach Anspruch 2 oder 3, **dadurch gekennzeichnet, dass** der Funktionskörper (31) zwei, in einer Ebene befindliche, voneinander beabstandete Halteelemente (36, 36.1) aufweist.

5. Befestigungsklemme nach Anspruch 4 in seinem Rückbezug auf Anspruch 3, **dadurch gekennzeichnet, dass** die Stellarme (37, 37.1) ausgehend von einem Wurzelbereich am Funktionskörper (31) sich diametral voneinander weg erstrecken.

6. Befestigungsklemme nach einem der Ansprüche 2 bis 5, **dadurch gekennzeichnet, dass** das zumindest eine Halteelement (36, 36.1) nach Art eines Nockens ausgebildet ist.

7. Befestigungsklemme nach einem der Ansprüche 1 bis 6, **dadurch gekennzeichnet, dass** Teil des Funktionskörpers (31) eine den Stellschenkel des Klemmelementes und das Stützwiderlager des Anschlussteils umgreifende Einhausung (33, 33.1, 34) ist.

8. Befestigungsklemme nach einem der Ansprüche 1 bis 7, **dadurch gekennzeichnet, dass** das Stützwiderlager des Anschlussteils (2) als Schenkel (6) mit einem quer dazu angeordneten und damit quer zur Spannwirkrichtung verlaufenden Spannwiderlagerschenkel (7), auf den beim Verspannen des Klemmelementes (3) mit dem Anschlussteil (2) das Spannmittel wirkt, ein Winkelstück bildet, und der Funktionskörper (31) an dem Spannwiderlagerschenkel (7) des Anschlussteils abgestützt ist.

9. Befestigungsklemme nach Anspruch 8, **dadurch gekennzeichnet, dass** zum Abstützen des Funktionskörpers (31) an dem Anschlussteil (2) dieser eine Anschlussteilaufnahme aufweist, mit der er das Anschlussteil (2) in Umfangsrichtung zumindest teilweise umgreift.

10. Befestigungsklemme nach einem der Ansprüche 1 bis 9, **dadurch gekennzeichnet, dass** der Funktionskörper (31) zumindest einen als Anlagefläche für ein zu montierendes Paneel (40, 40.1) ausgebildeten Funktionsbereich aufweist.

11. Befestigungsklemme nach einem der Ansprüche 1 bis 10, **dadurch gekennzeichnet, dass** der Funktionskörper (31) ein Kunststoffteil, insbesondere ein Kunststoffspritzgussteil ist.

12. Befestigungsklemme nach einem der Ansprüche 1 bis 11, **dadurch gekennzeichnet, dass** das Stützwiderlager des Anschlussteils (2) zwei mit ihren Abstützflächen (13) in Querrichtung zur Spannrichtung voneinander beabstandete Stützwiderlagerschenkel (8, 8.1) umfasst, wobei die Abstützflächen (13) durch eine Kontur der nach außen weisenden Stirnfläche der Stützwiderlagerschenkel (8, 8.1) bereitgestellt sind, und dass die Stützwiderlagerschenkel (8, 8.1) des Anschlussteils (2) durch einen der Längserstreckung desselben folgenden Materialstreifen (10) miteinander verbunden sind.

13. Befestigungsklemme nach Anspruch 12, **dadurch gekennzeichnet, dass** die Stützwiderlagerschenkel (8, 8.1) mit dem diese verbindenden Materialstreifen (10) Teil eines sich in Spannwirkrichtung erstreckenden, in seinem von dem Klemmelement (3) wegweisenden Endabschnitt zumindest ein erstes Anschlussorgan (9, 9.1) tragenden Schenkels (6) des Anschlussteils (2) sind.

14. Befestigungsklemme nach Anspruch 8 oder einem der Ansprüche 10 bis 12 in ihrem Rückbezug auf Anspruch 8, **dadurch gekennzeichnet, dass** der Spannwiderlagerschenkel (7) des Anschlussteils (2) einen mit einem Innengewinde ausgerüsteten Durchzug (5) mit einem hülsenartigen, zum Klemmelement (3) weisenden Fortsatz (14) aufweist, dessen Innengewinde von dem Gewindeschaft (11) eines Spannbolzens (4) gekämmt wird, und dass der Funktionskörper (31) in seiner auf dem Spannwiderlagerschenkel (7) abgestützten Grundplatte (32) eine Durchbrechung aufweist, in die der hülsenartige Fortsatz (14) des Innengewinde tragenden Durchzuges (5) eingreift.

15. Befestigungsklemme nach Anspruch 12 oder einem der Ansprüche 13 oder 14 jeweils in Rückbezug auf den Anspruch 12, **dadurch gekennzeichnet, dass** die beiden Stützwiderlagerschenkel (8, 8.1) hinsichtlich ihrer flächigen Ausrichtung parallel zueinander angeordnet sind.
